# EUROPEAN PATENT APPLICATION

(11) **EP 4 756 554 A1**
(43) Date of publication of application: **10.06.2026**
(21) Application number: 24218189.9
(22) Date of filing: 06.12.2024
(51) Int. Cl.: G05D 1/242, G05D 1/243, G05D 1/633, G05D 1/85

(54) **METHODS AND DEVICES FOR NAVIGATING AN UNCREWED MARINE VEHICLE**

(71) Applicant: FNV IP B.V., 2264 SG Leidschendam (NL)
(72) Inventor: Lafontaine, Stijn Cornée, 2264 SG Leidschendam (NL); Hendrix, Julius Louis Anselmus Maria, 2264 SG Leidschendam (NL); Laporte, Jonathan René Janick, 2264 SG Leidschendam (NL); Dias Bispo Carvalho, Diego, 2264 SG Leidschendam (NL); Brekelmans, Christiaan Theodorus Wijnand, 2264 SG Leidschendam (NL)
(74) Representative: FNV Intellectual Property

(57) **Abstract**

The present invention relates to methods and devices for navigating an uncrewed marine vehicle (UMV). The UMV comprises at least two sensors of different sensing modalities for detecting objects near the UMV. The UMV navigates while detecting the nearby objects on the way. When a malfunction in one sensor is detected, the UMV utilizes the other sensor, reconstructing sensor data. This way, the UMV can continue to use the object-detection based on modality of the failing sensor. Unlocking insights from Geo-Data, the present invention further relates to improvements in sustainability and environmental developments: together we create a safe and liveable world.

## Description

### FIELD OF THE INVENTION

The present disclosure generally relates to the field of uncrewed or unmanned marine vehicles (UMVs). Examples of UMVs are uncrewed surface vessels (USVs) and remotely operated vehicles (ROVs). These vehicles are used for various maritime applications, including subsea geo-data surveying, environment monitoring, maritime facility, and subsea infrastructure maintenance. USVs operate on the surface of a body of water, while ROVs may more typically be deployed for either water-surface or underwater operations, most typically underwater operations. Unlocking insights from Geo-Data, the present invention further relates to improvements in sustainability and environmental developments: together we create a safe and liveable world.

### BACKGROUND OF THE INVENTION

UMVs are configured to be operable without any human crew onboard. They may be remotely operated or controlled from a remote base station on land (e.g., a remote operating center), at sea or in the air; configured to operate autonomously, for example to autonomously navigate at sea on the surface and/or sub-sea; or operate under a combination of autonomous control and remote control. When operating autonomously, the UMVs may advantageously operate independently or with minimal (remote) human intervention.

One of the advantages of UMVs is their ability to operate in harsh and hazardous environments where a human presence is not ideal or not possible. This capability is particularly valuable for tasks such as deep-sea survey, environmental monitoring and underwater infrastructure inspection in extreme conditions. Furthermore, remote operations in marine environments are particularly advantageous because it reduces exposure of human staff to hazardous maritime surroundings. In addition, without staff on board, the size and weight of the vessel can be dramatically reduced, which leads to much more efficient operations, with reduced emissions. Remote operations thus increase safety and reduce environmental impact.

Enhancing the autonomy of UMVs may be desirable for several reasons. When human intervention is minimized, the autonomy can lead to increased productivity, reduced operational costs, and/or extended operation periods. Therefore, it is desirable to improve the ability of UMVs to operate autonomously. This may further reduce needs for base station intervention as remote control and needs for base stations to remain in constant contact with UMVs, for example reducing needs for deployment and/or presence of mother vessels or aircraft for remote control, instruction or monitoring of UMVs.

A challenge in UMV operations is ensuring reliable sensor data for navigation and awareness. Sensors are prone to malfunction, interference, or occlusion, regardless of their robustness and endurance. For instance, a camera can be obstructed by dirt, a LiDAR can misinterpret sun reflections on the water, and a radar might not detect certain materials like marine life or wooden ships. These issues can lead to unreliable data, posing a risk to the safe navigation of uncrewed marine vehicles.

To ensure a high level of situational awareness, multiple sensors with different modalities, such as cameras, LiDAR, and sonar, are often used together in one UMV. Each sensor has its own characteristics and limitations, and they detect the environment in distinct ways. Having multiple sensing modalities operating at the same time allows the UMV to maintain a high level of environment awareness. However, any sensor may have difficulties due to device malfunctioning or some environmental factors such as occlusion. Therefore, it is desired to have a solution that can minimize the impact of a failing sensor to the entire autonomous system allowing the uncrewed marine vehicle to navigate safely and effectively under various conditions.

### BRIEF SUMMARY OF THE INVENTION

In the first aspect, the invention provides an uncrewed or unmanned marine vehicle (UMV) configured to navigate autonomously. Remote intervention, for example by a human, can be available. The UMV comprises a plurality of sensors configured to detect objects proximal to the UMV. The plurality of sensors includes a first sensor having a first modality, configured to output first sensor data. A second sensor has a second modality that is different from the first modality, configured to output second sensor data. Thus, the UMV is equipped with two different sensors that acquire their own types of data. Examples could be a camera and a radar. The two different sensors have their respective modalities, which can be used for separate functions. The two different sensors have modalities that differ in the data that they acquire, resulting in that the respective first and second data are not interchangeable data.

In embodiments, the UMV further comprises an object-detection unit configured to detect objects from received sensor data. The object-detection unit is configured to detect objects based on the second sensor data that corresponds to the second modality. Thus, the object-detection unit can for example detect objects based on image detection techniques applied on spectroscopic data captured by cameras mounted on the UMV. As the UMV can navigate autonomously, the UMV has a navigation unit configured to navigate the UMV in view of the objects detected by the object-detection unit. The navigation is thus based on objects detected based on the second sensor data corresponding to the second modality. According to embodiments of the invention, a sensor redundancy is provided by providing a reconstruction unit and a sensor management unit. The reconstruction unit and sensor management unit are preferably provided on the UMV, although in embodiments, signals can be sent and received to a mothership or to land. The reconstruction unit and/or the sensor management unit can have a processor and memory. The memory of the reconstruction unit can be programmed with code that generates reconstructed first sensor data corresponding to the second modality. The reconstruction unit is configured to reconstruct the first sensor data corresponding to the first modality into reconstructed first sensor data corresponding to the second modality. When the second sensor is operating without error, the second sensor data corresponding to the second modality is sent to the object-detection unit by a sensor management unit. In this first operating state, the sensor management unit allows the second sensor to be fed to the object-detection unit. According to the invention, in case a failure of the second is detected, the sensor management unit interrupts the feeding of second sensor data and instead, the reconstructed first sensor data is sent to the object-detection unit. As a result, the object detection unit continues to be provided with data that correspond with the second modality and thus can continue to make decision based on data corresponding to the second modality. This configuration provides for a sensor redundancy based on sensor data already present at the UMV. The configuration enhances the reliability and robustness of the UMV's object detection and navigation capabilities by ensuring continuous operation even in the event of a sensor malfunction. By reconstructing the first sensor data to match the modality of the second sensor, the UMV can maintain accurate object detection and navigation, thereby improving safety and operational efficiency.

In embodiments, the object-detection unit is configured to detect objects from at least received first sensor data corresponding to the first modality. By simultaneously utilizing at least two different sensing modalities for object-detection, the UMV's environmental awareness can be enhanced.

In embodiments, the sensor management unit may be further configured to receive a malfunction signal indicating a malfunction of the second sensor. The malfunction signal can be generated from the second sensor, or from a control unit of the UMV. The malfunction signal can also be generated by the control unit by processing the sensor data of the second sensor to evaluate whether the data quality has been compromised. The failure detection can be based on comparing the second sensor data and the reconstructed first sensor data. As the reconstructed first data provides similar information as the second data, both corresponding to the second modality, comparing the two can result in detecting a malfunction.

In embodiments, the reconstruction unit may be configured to convert one modality to another by signal processing based on manipulating or filtering one or more modality characteristics. For example, if a LiDAR data needs to be converted, thus reconstructed, into a radar-like data, the LiDAR data can be processed to add noise typically visible in LiDAR and remove a portion of the data obtained from short ranges, and remove the features related to the materials that do not reflect radio waves. Such signal processing/filtering technique specific to specific modality conversions can be used without consuming too much computational power.

In embodiments, the malfunction of the second sensor may be determined based on comparing the second sensor data and the reconstructed first sensor data. After the reconstruction, the reconstructed first sensor data is formatted to resemble data from the second modality sensor and can thus replace the second sensor data. Comparing the reconstructed first and original second data can then be used to ascertain whether the second sensor is operating correctly. By comparing with the actual data with reconstructed data, the malfunctioning can be detected accurately in a timely manner.

Also, by comparing the actual second sensor data which is directly obtained from the physical environment using the second modality sensor, it is possible to evaluate whether the reconstruction is properly carried out. Such evaluation can be done using an evaluation function, which determines the accuracy of the reconstructed first sensor data and calibrates the reconstruction unit if needed. In embodiments, the reconstruction unit may contain an evaluation function for comparing the sensor data features, for example using a point cloud comparison technique, which is based on iterative closest point and/or clustering voxelization.

In embodiments, the sensor management unit is further configured to switch from the second state to the first state upon removal of the malfunction. This ensures that the UMV can resume normal operations once the sensor malfunction is resolved, maintaining operational continuity.

In embodiments, the UMV is a USV or an ROV. In embodiments, the features of the embodiments can be applied to both USV and the ROV which are connected to each other via an umbilical.

In embodiments, the reconstruction unit comprises a machine learning model, wherein the machine learning model is pre-trained to convert first sensor data corresponding to the first modality into reconstructed first sensor data corresponding to the second modality. The machine learning models can be generative models. These models are designed to generate new data samples that resemble a given dataset, often used in applications like image synthesis. An example is the family of Generative Adversarial Networks (GAN), that learn characteristics from one domain and can introduce these characteristics in data from another domain. GANs are composed of two main components: (1) the generator: creates new data samples (2) the discriminator: evaluate if the samples seem real, e.g., if they look similar to the domain of the training data or could be deemed as fake due to their low similarity. During training, both components are trained simultaneously.

Preferably, the machine learning model is pre-trained based on an attention mechanism, wherein the attention mechanism uses detected environmental objects as triggers. In embodiments, the reconstruction unit may be further configured to perform an additional training process when both the first and second sensors are functioning at normal performance levels. The additional training process comprises steps of receiving second sensor data from the second sensor having a normal performance level, generating a loss function based on the received second sensor data and the reconstructed first sensor data, and modifying the machine learning model based at least in part on the loss function. This continuous learning process ensures that the machine learning model remains accurate and effective over time.

In embodiments, the UMV further comprises a weather sensor configured to acquire weather data associated with sensor data acquired by the plurality of sensors and to provide the weather data to the machine learning model for training. This allows the machine learning model to account for environmental conditions, enhancing the accuracy and reliability of the reconstructed sensor data.

In embodiments, the machine learning model is further configured to receive input parameters of any or any combination of sensor orientation parameters, timestamps of sensor data, and surface traffic data. This ensures that the machine learning model can accurately reconstruct sensor data based on a comprehensive set of input parameters.

According to a second aspect, the invention provides a method for autonomous navigation of a UMV at sea. The method comprises the steps of acquiring first sensor data using a first sensor having a first modality and acquiring second sensor data using a second sensor having a second modality that is different from the first modality. For autonomous navigation, objects are detected, and navigation decisions are taken on the basis of detected objects. Embodiments of the invention can comprise detecting at least one object based on data corresponding to the second modality to generate a set of object location data and navigating the UMV based on the object location data. Detecting objects can also be based on the first sensor data corresponding with the first modality. However, the first modality sensor data cannot replace the second modality data because of incompatibility, although it might be possible to detect the same objects from both first and second sensor data.

The method according to the invention provides for redundancy by including the reconstruction of the first sensor data into reconstructed first sensor data corresponding to the second modality. As a result, in case of failure of the second sensor, the feed of second sensor data corresponding to the second modality can be replaced by the reconstructed first data corresponding to the second modality.

In embodiments, to automatically continue with different data in case of a failure, the method comprises monitoring the operation of the second sensor, and upon determining a malfunction of the second sensor, switching the detection of at least one object based on data corresponding to the second modality from being based on the second sensor data to being based on the reconstructed first sensor data. This method ensures continuous and reliable object detection and navigation even in the event of a sensor malfunction, enhancing the safety and operational efficiency of the UMV.

The method of the embodiments of the second aspect can be carried out by the embodiments of the UMV described above with respect to the first aspect.

In embodiments, the reconstructing may comprise converting using a machine learning model, wherein the machine learning model is pre-trained to convert first sensor data corresponding to the first modality to reconstructed first sensor data according to the second modality.

In embodiments, the method may further comprise a step of pre-training the machine learning model based on an attention mechanism, wherein the attention mechanism uses detected environmental objects as triggers. This ensures that the machine learning model can accurately reconstruct sensor data based on relevant environmental features.

In embodiments, the monitoring may be based on comparing the second sensor data and the reconstructed first sensor data. In embodiments, the monitoring may be based on receiving a malfunction signal from the second sensor. In embodiments, the monitoring is based on evaluating the second sensor data. This allows for continuous assessment of the sensor's performance, ensuring reliable object detection and navigation.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are therefore not to be considered to be limiting of its scope, the principles herein are described and explained with additional specificity and detail through the use of the accompanying drawings in which:
FIG. 1 is schematic view of a USV and an ROV navigating at sea.
FIG. 2 is a diagram showing an arrangement example of a UMV.
FIG. 3 is a flow chart showing a method for autonomous navigation of a UMV at sea.

### DESCRIPTION OF ILLUSTRATIVE EMBODIMENTS

The following is a description of certain embodiments of the invention, given by way of example only and with reference to the drawings.

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. A reference to an embodiment in the present disclosure can be a reference to the same embodiment or any other embodiment. Such references thus relate to at least one of the embodiments herein.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions, will prevail.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims or can be learned by the practice of the principles set forth herein.

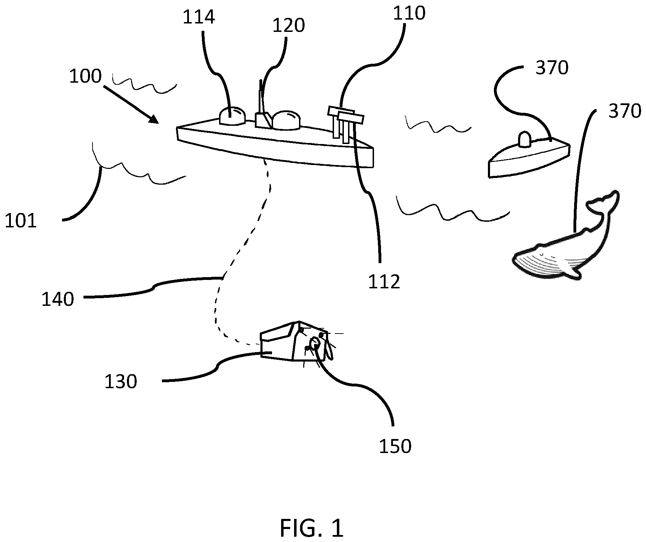

FIG. 1 shows a schematic view of two examples of UMVs. The first example is a USV 100 which operate at the sea surface 101. The USV 100 may comprise at least two sensors 110, 112 configured to detect the surrounding environment including nearby objects. Acquired sensor data may include information related to nearby objects such as other vessels, buoys, floating debris, marine life, sea marks, or any other objects which can influence the navigation risk of the USV 100. The USV 100 may also comprise a weather sensor 114 which can collect current weather information. The weather information may be related wave height, wind speed, wind direction, visibility, precipitation, temperature, humidity, UV intensity, time, fogginess, light level, tide, and any other environmental factor that can affect the navigation of the USV 100.

The USV 100 may further comprises a wireless communication means 120 which can transmit and receive data when needed. The USV 100 can navigate based on processing of the sensor data acquired from the sensors. The sensors 114, 110, 112 (not illustrated but the sensors can be also installed underwater) can be any suitable sensor types for detecting the surrounding maritime environment, the sensor can be a radar sensor, a lidar sensor, optical sensor, sonar sensor, a weather sensor, thermal sensor, or any other suitable sensor known in the art. A second example of a UMV is an ROV 130. The ROV 130 can be connected to a surface vessel such as the USV 100 via an umbilical 140. The umbilical cable 140 physically connects the USV 100 and the ROV 130 together but can also comprise a power channel and/or a communication channel such that the two UMVs can communicate electrical power signals and communication signals. Similarly, as the first example of the USV 100, the ROV 130 may comprise two or more sensors 150 which are suitable for detecting underwater environment including nearby objects, marine life, underwater installations, seabed, or any other factors which can affect the navigation of the ROV 130. The sensor data may also include water conditions.

In embodiments, the first sensor 110 and the second sensor 112 have different modalities. For example, the first sensor 110 can be an optical RGB camera, whereas the second sensor 112 can be a LiDAR or a thermal/IR camera. FIG.1 also shows an object 370 which can be for example, another vessel or a marine life such as a whale. This object 370 can be detected in sensor data obtained by the first and second sensors 110, 112 in first and second object-detection units respectively. Since the USV 100 is equipped with the optical RBG camera 110 and the LiDAR camera 112, the USV 100 may obtain a colored 2D image of the object 370 and at the same time obtain a 2D LiDAR map of the surroundings including object 370. The 2D LiDAR map, on the other hand, represents distance variation using an artificial color gradient to graphically represent specific distance with different colors. While the colored 2D image provides intuitive perception of the situation to human, the 2D LiDAR map can be particularly useful for quickly identifying for example other vessels at sea.

When the LiDAR camera 112 is malfunctioning due to device failure or occlusion, the 2D map cannot be obtained properly using the camera 112. However, it might be still desired to have such 2D LiDAR map which can be used to identify marine animals quickly. The present invention provides a solution by reconstructing the colored 2D image obtained from the optical RGB camera 110 into a LiDAR-type image.

In accordance with this disclosure the 2D RGB camera image is a first modality and the LiDAR image is second sensor data corresponding to a second modality. Embodiments provide a reconstruction step to reconstruct a LiDAR image from the 2D RBG camera data.

This can be done for example by processing the 2D colored image depicting a marine animal such as a big whale 370 using a pattern recognition technique. The relevant pixels in the 2D colored image can get a value based on a distance estimate. This way, a reconstructed LiDAR-map-type image is created and can still serve the purpose of fast identification of living objects. Although such, a reconstructed image may not deliver the same quality as the actual LiDAR camera 112, but in case of a failure the reconstructed data provides an alternative that can be used productively. Effectively, this can be seen as an artificial redundancy system for sensors having different sensing modalities. When the big whale is identified quickly by an object-detection module in the USV 100, the USV 100 may change its navigation path to avoid collision with the big whale 370.

The above scenario of avoiding big whale 370 can also be applied to the ROV 130 which can also be equipped with different sensors 150 as the USV 100 described above. Same redundancy method can be applied such that the ROV 130 can utilize 2D LiDAR image even when a LiDAR camera is malfunctioning to quickly identify the whale 370 and subsequently avoid collision with the whale 370 and protect it.

It should be noted that the teaching of the example is not limited to this combination of optical RGB camera and LiDAR camera. Such a redundancy system can be applied to any pair of two different sensing modalities which can detect a same object.

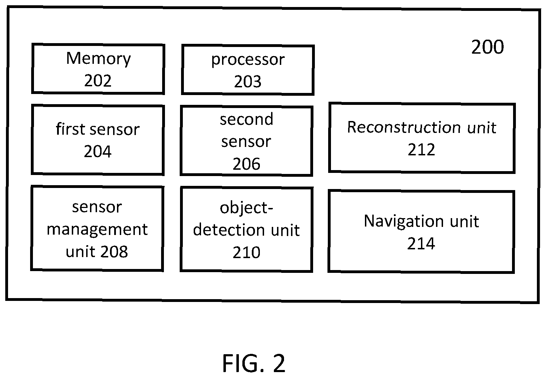

FIG.2 illustrates a diagram showing an arrangement example of a UMV 200. The UMV 200 may comprise a memory 202 which is a non-transitory computer readable medium, a processor 203, a plurality of sensors 204, 206, a sensor management unit 208, an object-detection unit 210, a reconstruction unit 212, and a navigation unit 214. The first and second sensors 204, 206 have different sensing modalities and both are suitable for detecting a same object proximal to the UMV 200. The object-detection unit 210 can be capable of detecting objects from the two sensing modalities of the first and second sensors 204, 206. In normal situations in which the two sensors 204, 206 are fully operating without malfunction, the object-detection unit 210 can utilize both sensing modalities to obtain comprehensive information about the object.

The reconstruction unit 212 is capable of converting different modalities by data processing, for example reconstructing a set of data of the first sensing modality of the first sensor 204 into a reconstructed set of data that corresponds the second sensing modality. Such modality conversion can be reversed, i.e., from the second sensor modality of the second sensor 206 to the first. In normal operating conditions, such reconstructions are not needed because all sensors 204, 206 are working properly.

Correct operation of the two sensors is also an opportunity to monitor and/or train the reconstruction unit 212 by comparing the reconstructed data with the actual (truth) data. Using evaluation functions, such comparison can be used to improve the performance of the reconstruction unit 212, in other words, to calibrate it.

Also, correct second sensor data can be used to generate a loss function that is based on comparing that correct second sensor data with reconstructed first sensor data both corresponding with the second modality. In case the loss function indicates that the reconstructed first data does not correspond well enough with the actual second data, the machine learning model for reconstructing is to be adapted.

When the reconstruction unit 212 is freshly calibrated, and it is detected that the reconstructed data do not match the actual data, this then could indicate the actual sensor corresponding to the reconstructed modality is malfunctioning. In this case, the reconstructed data could be used by the navigation unit 214 for route planning, instead of sending the actual (truth) data from the sensor that is likely malfunctioning. This can ensure that the false data is filtered properly.

This comparison of the reconstructed and actual data, which can be carried out by the sensor management unit 208, can be carried out periodically for monitoring purposes. When a mismatch between the two sets of data no longer exists, it is very likely indicating that there is no malfunctioning in the actual sensor. Then, the navigation unit 214 can switch its mode to use the actual sensor data instead of the reconstructed data. This ensures that such redundancy mechanism is activated only when there is a malfunction.

In embodiments, a malfunction of a sensor can be monitored by the sensor itself. When a sensor detects a malfunction, the sensor can send a malfunction signal to the sensor management unit 208. When the second sensor data show a malfunction, for example, a very dark image received from an optical camera in a sunny environment, the object-detection unit 210 can directly sense a malfunction from it and inform the sensor management unit 208 accordingly.

In embodiments, the UMV 200 may contain additional sensors of different sensing modalities. Same redundancy mechanism can be applied across different modalities in such UMV 200 with more than three sensing modalities.

In case of a normal operation, which can also occur after a failure has been resolved, the sensor management unit 208 provides the second sensor data to the object-detection unit 210. The object-detection unit is configured to, when provided with data of the second modality, to identify objects and to provide such objects to the navigation unit to avoid those objects. The navigation unit can be programmed to decide and generate a navigation trajectory for the USV/ROV that complies with the laws at sea and that takes into account objects in the surroundings.

In case of a failure of the second sensor, detected or reported, this would without the invention result in the object-detection unit being fed with erroneous data resulting in failing object detection and subsequently possibly failing navigation. The sensor management unit 208 however switches and replaces the second sensor data with reconstructed first sensor data. This ensures that sensor data corresponding to the second modality is being fed to the object-detection unit 201 and correct decision can be made on detected objects.

Although the invention is described here in combination with USV or ROV, the training of the reconstruction can also happen remote from the sensors. Sensor data can be collected and machine learning can be centralized for several USVs and/or ROV. This will train the reconstruction unit quicker. Moreover, in case of failures of a sensor, training can be provided based on second sensor data from a failing second sensor. This allows training a machine learning method to recognize how to determine that sensor data is coming from a malfunctioning sensor without that sensor indicating by itself that it is malfunctioning.

Also, machine learned programs can be sent to the USV or ROV for updating the reconstructions models and/or the determining of a malfunctioning of a sensor.

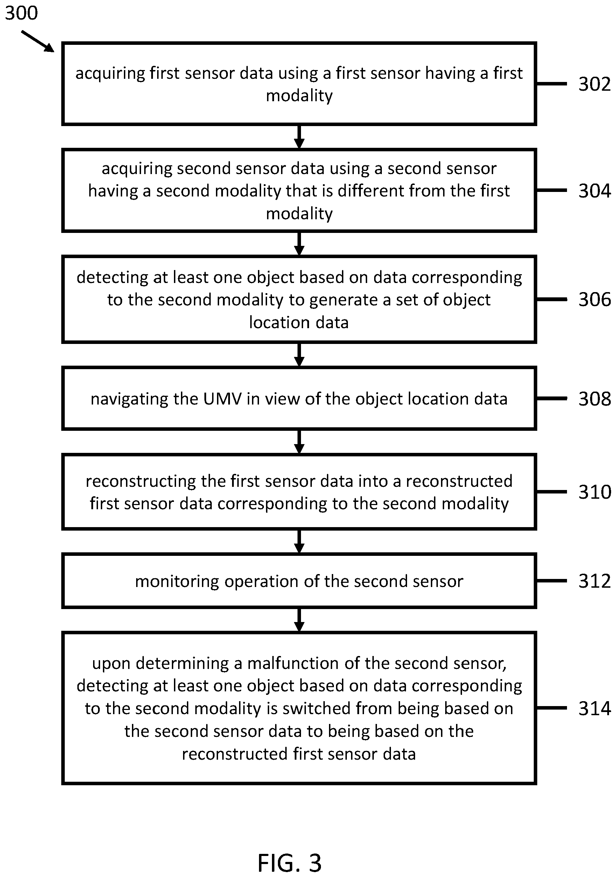

FIG. 3 shows a flow chart of a method 300 for autonomous navigation of a UMV at sea. Step 302 relates to acquiring first sensor data using a first sensor having a first modality. Step 304 relates to acquiring second sensor data using a second sensor having a second modality that is different from the first modality. The two sensors may be installed in the UMV such that the two sensors can detect a same object simultaneously based on the two different sensing modalities. For example, a RGB image and a heatmap image of an object proximal to the UMV.

Step 306 relates to detecting at least one object based on data corresponding to the second modality to generate a set of object location data. In this step, the second sensor data is used in generating a set of object location data indicative of the locations of the objects detected by the second modality. In embodiments, the method 300 may also detect the same at least one object based on the first sensor data corresponding to the first modality to generate a set of object location data together with the second modality. In embodiments, the method 300 may fuse the two sets of object location data generated from the first and second modalities into one set of object location data.

Step 308 relates to navigating the UMV in view of the object location data. In embodiments, the UMV may generate a navigation risk score to the detected object(s). when the navigation risk score exceeds a predetermined threshold, a navigation path will be generated to avoid the object(s).

Step 310 relates to reconstructing the first sensor data into a reconstructed first sensor data corresponding to the second modality. Step 312 relates to monitoring operation of the second sensor. The reconstructed first sensor data can be used to monitor the functionality/operation-status of the second sensor by comparing the reconstructed first sensor data and the actual second sensor data.

In embodiments, these two steps may further comprise an additional mirrored process, reconstructing second sensor data into a reconstructed second sensor data in the first sensing modality. This process allows monitoring of the first sensor. By cross reconstructing the sensor data, the operation status of the two sensors can be simultaneously monitored, cross-checked.

Step 314 relates to upon determining a malfunction of the second sensor, detecting at least one object based on data corresponding to the second modality is switched from being based on the second sensor data to being based on the reconstructed first sensor data. When the first and second sensors are all functioning without problem, there is no need to use reconstructed data for navigating. The reconstructed data can be solely used for monitoring purposes. But when the second sensor is detected to be malfunctioning, then the second sensor data is no longer used for object-detection and navigation. Instead, the reconstructed first sensor data in the appearance of the second modality is used for the object-detection and navigation purposes. This step can also have an additional mirrored process which relates to a situation when the first sensor, not the second sensor, is malfunctioning. In this case, the method may further include a step of upon determining a malfunctioning of the first sensor, detecting at least one object based on data corresponding to the first modality is switched from being based on the first sensor data to being based on the reconstructed first sensor data.

The invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention.

## Claims

1. An uncrewed marine vehicle (UMV) configured to navigate autonomously, wherein the UMV comprises:
- a plurality of sensors configured to detect objects proximal to the UMV, wherein the plurality of sensors comprises:
∘ a first sensor of a first modality, configured to output first sensor data; and
∘ a second sensor of a second modality that is different from the first modality, configured to output second sensor data;
- an object-detection unit configured to detect objects based on sensor data that is received at the object-detection unit, wherein the object-detection unit is at least configured to detect objects based on received second sensor data corresponding to the second modality;
- a navigation unit configured to generate navigation instructions for the UMV based on the objects detected by the object-detection unit;
- a reconstruction unit having a processor and memory configured to generate reconstructed first sensor data corresponding to the second modality by reconstructing the first sensor data; and
- a sensor management unit configured to:
∘ in a first state, send the second sensor data corresponding to the second modality to the object-detection unit, and
∘ upon determining a malfunction of the second sensor, switch from the first state to a second state, and send the reconstructed first sensor data to the object-detection unit.

2. The uncrewed marine vehicle (UMV) of claim 1, wherein the object-detection unit is further configured to detect objects from at least received first sensor data corresponding to the first modality.

3. The uncrewed marine vehicle (UMV) of any of the previous claims, wherein the sensor management unit is further configured to:
- receive a malfunction signal indicating a malfunction of the second sensor; and/or
- comparing the reconstructed first sensor data with the second sensor data, and, upon determining a difference above a predetermined threshold difference, determining the malfunction of the second sensor data.

4. The uncrewed marine vehicle (UMV) of any of the preceding claims, wherein the sensor management unit is further configured to upon removal of the malfunction, switch from the second state to the first state.

5. The uncrewed marine vehicle (UMV) of any of the preceding claims, wherein the UMV is an uncrewed surface vessel (USV) or is an underwater remotely operated vehicle (ROV) or is an assembly of a USV and ROV.

6. The uncrewed marine vehicle (UMV) of any of the previous claims, wherein the reconstruction unit comprises the machine learning model, wherein the machine learning model is pre-trained to convert first sensor data corresponding to the first modality into reconstructed first sensor data corresponding to the second modality.

7. The uncrewed marine vehicle (UMV) of claim 6, the machine learning model is pre-trained based on an attention mechanism, wherein the attention mechanism uses detected environmental objects as triggers

8. The uncrewed marine vehicle (UMV) of claim 6 or 7, wherein the reconstruction unit is further configured to perform an additional training process when both the first and second sensors are functioning at normal performance level, the additional training process comprises steps of:
- receiving second sensor data that is correct;
- generating a loss function based on the received second sensor data and the reconstructed first sensor data;
- modifying the machine learning model based at least in part of the loss function.

9. The uncrewed marine vehicle (UMV) of any of the claims 6-8, wherein
- the UVM further comprises a weather sensor configured to acquire weather data associated with sensor data acquired by the plurality of sensors, and to provide the weather data to the machine learning model for training,
and/or;
wherein the machine learning model is further configured to receive input parameters of any or any combination of:
- sensor orientation parameters;
- timestamps of sensor data; and/or
- surface traffic data.

10. A method for autonomous navigation of an uncrewed marine vehicle (UMV) at sea, the method comprising the steps of:
- acquiring first sensor data using a first sensor having a first modality,
- acquiring second sensor data using a second sensor having a second modality that is different from the first modality,
- detecting at least one object based on second sensor data corresponding to the second modality to generate a set of object location data,
- navigating the UMV in view of the object location data.
- reconstructing the first sensor data into a reconstructed first sensor data corresponding to the second modality;
- determining a malfunction of the second sensor;
wherein, upon determining the malfunction of the second sensor, detecting at least one object based on second sensor data corresponding to the second modality is switched from being based on the second sensor data to being based on the reconstructed first sensor data corresponding to the second modality.

11. The method of claim 10, wherein the reconstructing comprises reconstructing using a machine learning model, wherein the machine learning model is pre-trained to convert first sensor data corresponding to the first modality to reconstructed first sensor data corresponding to the second modality.

12. The method of claim 11, wherein the method further comprises a step of:
- pre-training the machine learning model based on an attention mechanism, wherein the attention mechanism uses detected environmental objects as triggers.

13. The method of any of claims 10-12, wherein the determining the malfunction comprises comparing the second sensor data and the reconstructed first sensor data.

14. The method of any of claims 10-12, wherein the determining is based on evaluating the second sensor data.

15. The method of any of claims 10-14, wherein the method further comprises a step of:
- evaluating the detected object to determine a navigation risk score for said detected at least one object.
